# EUROPEAN PATENT APPLICATION

(11) **EP 4 787 271 A1**
(43) Date of publication of application: **05.08.2026**
(21) Application number: 26154591.7
(22) Date of filing: 28.01.2026
(51) Int. Cl.: G06Q 30/0251, G06Q 30/015

(54) **INFORMATION PROCESSING APPARATUS, CONTROL METHOD THEREOF, AND STORAGE MEDIUM**

(30) Priority: 30.01.2025 JP 2025014096
(71) Applicant: Canon Kabushiki Kaisha, Tokyo, 146-8501 (JP)
(72) Inventor: SHIROZU, Yuichiro, Tokyo (JP)
(74) Representative: WESER & Kollegen Patentanwälte PartmbB

(57) **Abstract**

The present disclosure is directed to an information processing apparatus (310, 320) comprising: interaction means (311, 321) for providing an interaction using generative Al to a user of an apparatus providing a service; determination means (311, 321) for inputting at least one item of information among an interaction history of interactions with the user, user information, and product information to the generative AI and cause the generative Al to determine whether a current time is an appropriate time to propose an order of a product; and proposing means (311, 321) for responding to the interaction and propose the order of the product in a case where the generative AI determines that the current time is an appropriate time to propose the order of the product.

## Description

### TECHNICAL FIELD

The present disclosure relates to an information processing apparatus that prints a document through generative artificial intelligence (Al), a control method thereof, and a storage medium.

### BACKGROUND

With a product which has a chat function, new products, consumables, and the like can be ordered through the chat function. Japanese Patent Laid-Open No. 2023-99334 proposes a method in which a user entering a chat room is used as a trigger for sending promotional information to the chat room, for example.

### SUMMARY

However, with this past technique, information for proposing orders is obtained through chats using generative artificial intelligence (Al) or the like, but in terms of the timing of the order proposal activities, entry into the chat room is the only trigger used. In other words, proposals to orders are made regardless of the user's desire to make an order. However, more effective order proposal activities are possible if the appropriate timing of such order proposals can be determined according to the content of interactions throughout the flow of responses in the chat with the user.

The present disclosure enables the realization of a novel technique for appropriately determining the timing to propose an order according to the content of an interaction.

The present disclosure in its first aspect provides an information processing apparatus as specified in claim 1. Optional features are specified in claim 2 to 14.

The present disclosure in its second aspect provides a method for controlling an information processing apparatus as specified in claim 15.

The present disclosure in its third aspect provides a non-transitory computer-readable storage medium as specified in claim 16.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram illustrating an example of the network configuration of a printing system according to one embodiment.
Fig. 2 is a block diagram illustrating an example of the hardware configuration of a computer and each of servers according to one embodiment.
Fig. 3 is a block diagram illustrating an example of the hardware configuration of a printer according to one embodiment.
Fig. 4 illustrates a UI indicating a series of interactions according to one embodiment.
Figs. 5A-5B are a sequence chart illustrating interactions among elements according to one embodiment.
Fig. 6 is a diagram illustrating an example of a prompt according to one embodiment.
Fig. 7 illustrates a UI indicating a series of interactions according to one embodiment.
Fig. 8 illustrates a UI indicating a series of interactions according to one embodiment.
Fig. 9 illustrates a UI indicating a series of interactions according to one embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

### System Configuration

A first embodiment of the present disclosure will be described hereinafter. The configuration of a printing system according to the present embodiment will be described first. The printing system according to the present embodiment is a printing system aimed at an image forming apparatus. In the printing system, a print job is sent to the image forming apparatus from an externally-connected PC. When generating the print job, print settings thereof are edited on the screen of the PC as necessary.

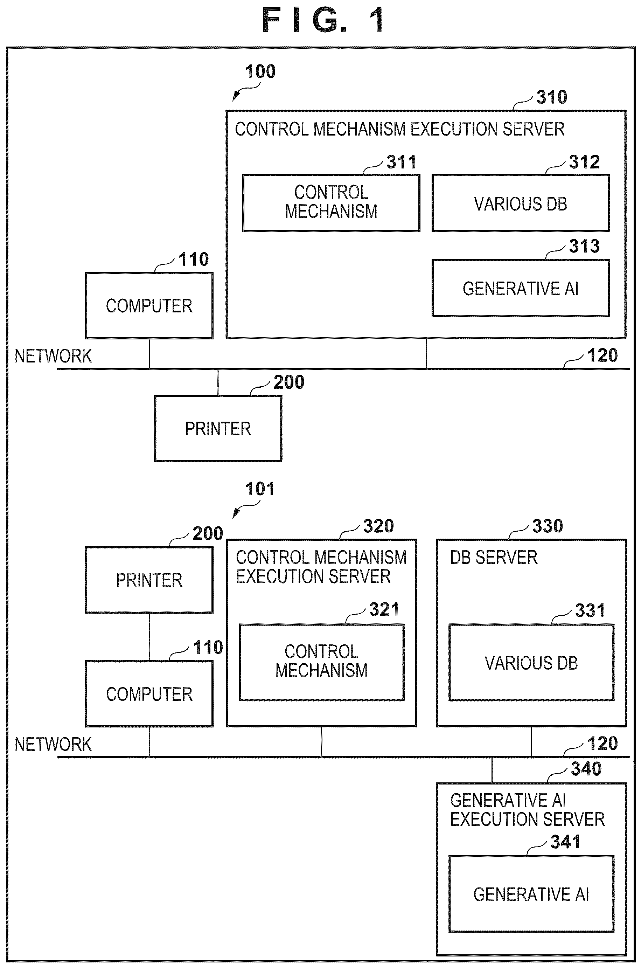

An example of the network configuration of a printing system that implements a chat system according to the present embodiment will be described with reference to Fig. 1. As illustrated in Fig. 1, a printing system 100 includes a computer 110, which is a terminal apparatus; a printer (printing apparatus) 200 configured to be capable of printing; a control mechanism execution server 310; and a network 120 communicatively connecting those elements to each other. The network connections may be made using wired connections, or using a wireless communication method such as Wireless Fidelity (Wi-Fi), for example.

The computer 110 is an example of an information processing apparatus, and is an apparatus such as a personal computer, a smartphone, a tablet terminal, or the like, for example. The printer 200 is an example of an image processing apparatus, an image forming apparatus, or the like. The printer 200 is, for example, a single function printer (SFP) such as an ink jet printer, a copier, or the like, or a multifunction peripheral (MFP) having functions such as a printer function, a copier function, and the like.

The control mechanism execution server 310 is an example of an information processing apparatus, and is a server constituted by a computer such as a personal computer, for example. A control mechanism 311 of the control mechanism execution server 310 executes at least some of characteristic control of the present disclosure using generative Al 313 and the like. Various types of data used for user information, sales, and the like are stored in various databases (DBs) 312. The various types of data are, for example, personal information of users, the status of specifications of the printer 200, a purchase history, and an inquiry history.

Note that as indicated by 101, in this system, the printer 200 may be connected to the computer 110 using a Universal Serial Bus (USB) connection or the like. The configuration may also be such that various DBs 331 are stored in a DB server 330 separate from the control mechanism execution server 320 and used. The configuration may also be such that generative Al 341 is stored in a generative Al execution server 340 separate from the control mechanism execution server 320 and used. In this case, the control mechanism execution server 320 acts as a server which mainly executes a control mechanism 321. Although the following descriptions will describe the form of the control mechanism execution server at the control mechanism execution server 310, as indicated by 100, the control mechanism execution server can also be implemented as the control mechanism execution server 320 in the form indicated by 101. The operations of the control mechanisms 311 and 321 are not limited to being implemented by the control mechanism execution servers 310 and 320, and may be distributed as programs, created in the control mechanism execution servers 310 and 320, to the computer 110 or the like and executed.

### Hardware Configuration

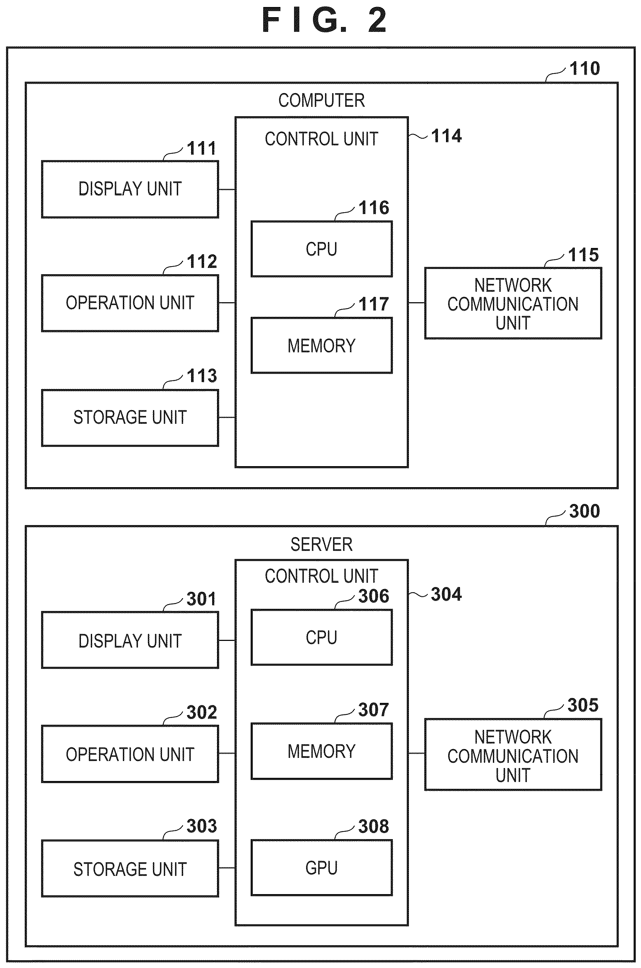

An example of the hardware configurations of the computer 110, as well as a server 300 serving as the control mechanism execution server 310 or the like, according to the present embodiment, will be described with reference to Fig. 2.

The computer 110 includes a display unit 111, an operation unit 112, a storage unit 113, a control unit 114, and a network communication unit 115, and these components are communicably connected to each other. For example, a desktop or laptop personal computer, a tablet terminal, a smartphone, or the like can be used as the computer 110.

The control unit 114 is constituted by a Central Processing Unit (CPU) 116 and a memory 117, and controls the computer 110 as a whole. The display unit 111 is constituted by a display such as a liquid crystal panel or the like, for example, and can display images and the like. The operation unit 112 is constituted by a mouse, a keyboard, and the like, for example, and can accept input operations made by a user 10. Note that the operation method is not limited thereto, and the configuration may be such that, for example, the computer 110 has a touch panel, and the touch panel functions as both the display unit 111 and the operation unit 112.

The storage unit 113 is constituted by, for example, a storage medium such as a hard disk drive (HDD), a solid-state drive (SSD), or the like, and stores various types of information such as various types of programs (software) necessary for the computer 110 to operate. The programs are loaded into the memory 117 and executed by the CPU 116 as necessary. The programs include programs for causing the CPU 116 (the computer) to execute the units, control, and the like of the printing system 100. Note that the location where the programs are stored is not limited to the storage unit 113 of the computer 110. The programs may be stored in the printer 200 or the control mechanism execution server 310, for example, or may be stored in a distributed manner among the computer 110, the printer 200, and the control mechanism execution server 310. The network communication unit 115 inputs and outputs data with external devices over an external network.

For the server 300, an example of the hardware configuration in which the server 300 includes the control mechanism execution servers 310 and 320, the DB server 330, the generative Al execution server 340, and the like is illustrated. The server 300 includes a display unit 301, an operation unit 302, a storage unit 303, a control unit 304, and a network communication unit 305, and these components are communicably connected to each other.

The control unit 304 is constituted by a CPU 306 and a memory 307, and controls the server 300 as a whole. It is preferable that the control unit include a graphics processing unit (GPU) 308. The display unit 301 is constituted by a display such as a liquid crystal panel or the like, for example, and can display images and the like. The operation unit 302 is constituted by a mouse, a keyboard, and the like, for example, and can accept input operations made by an administrator. Note that the operation method is not limited thereto, and the configuration may be such that, for example, the server 300 has a touch panel, and the touch panel functions as both the display unit 301 and the operation unit 302. The server 300 may be configured lacking at least one of the display unit 301, the operation unit 302, and the like, under the assumption that the server 300 will be operated by connecting thereto from an external machine.

The storage unit 303 is constituted by a storage medium such as an HDD, an SSD, or the like, for example, and stores various types of information such as various programs (software) necessary for the server 300 to operate. The programs are loaded into the memory 307 and executed by the CPU 306 as necessary. Note that the location where the programs are stored is not limited to the storage unit 303 of the server 300. In this manner, the hardware configuration of the server 300 is the same as the hardware configuration of the computer 110.

### Configuration of Printing Apparatus

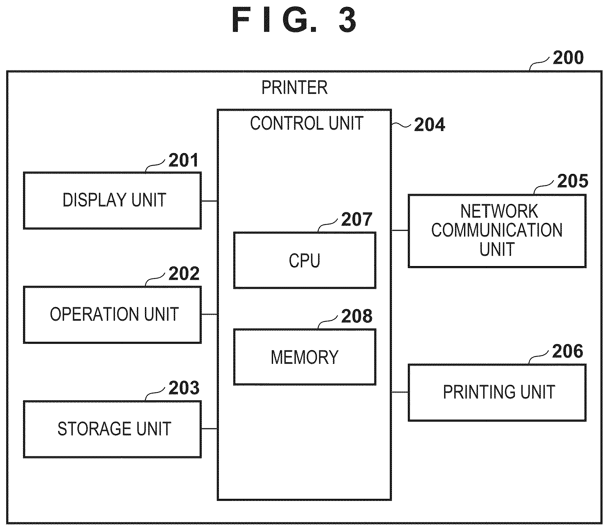

An example of the hardware configuration of the printer according to the present embodiment will be described with reference to Fig. 3. As illustrated in Fig. 3, the printer 200 includes a display unit 201, an operation unit 202, a storage unit 203, a control unit 204, a network communication unit 205, and a printing unit 206, and these components are communicably connected to each other. The printer 200 may be any device having a printing function, e.g., an SFP such as an ink jet printer, a multifunction peripheral (MFP), or the like.

The control unit 204 is constituted by a CPU 207 and a memory 208, and controls the printer 200 as a whole. The display unit 201 is constituted by a display such as a liquid crystal panel or the like, for example, and can display images and the like. The operation unit 202 is constituted by a touch panel, various types of buttons, and the like, and can accept input operations made by the user 10. Note that the configuration may be such that the computer 110 has a touch panel, and the touch panel functions as both the display unit 111 and the operation unit 112.

The storage unit 203 is constituted by a storage medium such as an HDD, an SSD, or the like, for example, and stores various types of information such as various programs (software) necessary for the printer 200 to operate. The programs are loaded into the memory 208 and executed by the CPU 207 as necessary. The network communication unit 205 inputs and outputs data with external devices over an external network. The printing unit 206 prints digital data stored in the storage unit 203, the memory 208, or the like as images on a printing medium (a sheet) in accordance with instructions from the control unit 204. The printing method may be an ink jet method, a toner-based method, or another method.

### Chat Screen

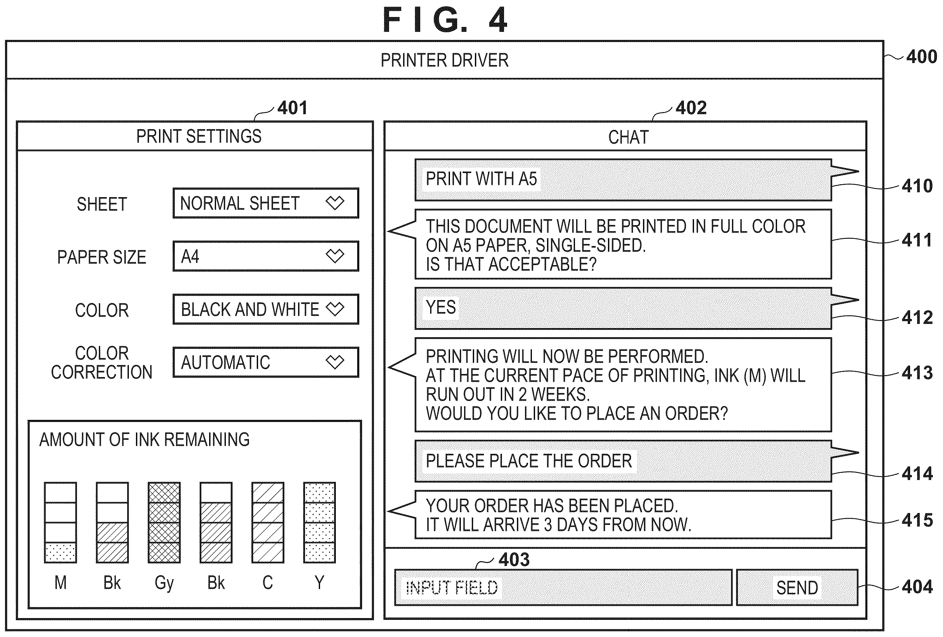

An example of the screen of a chat system in which the technique of the present disclosure is applied will be described with reference to Fig. 4. Fig. 4 illustrates an example of a user interface (UI) indicating a state in which a chat is complete. A UI 400 is implemented by the CPU 116 in the computer 110. In the present embodiment, such a UI is displayed in the display unit 111 of the computer 110. The UI 400 is an example of a UI displayed when the printer driver of the printer 200 displays a print settings screen. However, the UI 400 is not limited thereto, and may be in the form of a UI displayed in cooperation with a service or app such as Copilot (registered trademark) and executed. The configuration may also be such that the UI is displayed in the display unit 201 of the printer 200, for example. In addition, the configuration may be such that the UI is displayed on a touch panel in which a display unit and an operation unit are integrated, in the computer 110, the printer 200, or the like. In this process, an exchange in a chat window 402 progresses in stages. Additionally, the exchange is not limited to that in the chat window 402, and various exchanges are performed.

A printer driver (the UI 400) displays print settings 401 and the chat window 402, for example. The content and format of the display are not limited thereto, and various display formats may be used. Settings for use when printing using the printer 200 can be made in the print settings 401. For example, the paper (type), the paper size, colors, and the color correction can be set. These print setting items can be set by operating an operation object in the print settings 401, and furthermore, the settings can be made in accordance with interactions performed through the chat window 402 (described later). The details of the settings are merely examples, and are not intended to limit the present disclosure. In addition, the print settings 401 are displayed such that the amount of ink remaining for each of colors can be recognized at a glance.

The chat window 402 includes an input field 403 at the bottom thereof that accepts inputs from the user 10. Although an example of text input is described here, voice input may be used instead, and in such a case, utterances made by the user may be converted into text through voice recognition, and the text may then be input to the generative Al. The input field 403 is a region in which the user 10 can input natural language (prompts) using a keyboard, for example, from the operation unit of the computer 110. The content entered by the user 10 in the input field 403 is confirmed by the user 10 pressing a send button 404, and the computer 110 sends the content to the control mechanism execution server 310. In other words, the prompt is text (natural language) input to the generative AI. The content sent and the responses thereto are displayed in the chat window 402 as indicated by text 410 to 415. In Fig. 4, text 410, 412, and 414 indicate natural language text prompts input and sent by the user 10, and text 411, 413, and 415 indicate response text generated by the system.

Here, in the chat window 402, the user 10 has instructed printing on A5 paper using the text 410. In response, with the text 411, the system has inquired about other conditions necessary to execute the printing, such as whether the printing is color or black and white, and whether the printing is single-sided or double-sided. Furthermore, with the text 412, the user 10 has responded with agreement to color and single-sided printing proposed by the text 411. Subsequently, with the text 413, the system has noted that printing is underway, and is making an order proposal to prompt the user to order magenta ink, which is running low. Here, the system is proposing the order having determined, based on the interaction history, print history, and the like thus far, that the current time is appropriate for proposing the order. The determination of the timing of the order proposal will be described in greater detail later. Furthermore, with the text 414, the user 10 has agreed to the order from the text 413 and has instructed the order to be placed. Accordingly, with the text 415, the system places the order and provides a notification of the estimated arrival time of the product. In this manner, according to the present embodiment, the timing for an order proposal is determined, and the proposal is made, in accordance with the content of the interaction in the chat window (also called a "chat room") where the print settings are made, the details of the printing, and the like. This processing will be described in detail later. By such processing, the risk that the system runs out of ink and becomes at least temporarily not operable is reduced. Compared to automatically ordering new ink when it is running low, user acceptance and convenience is increased when the order has to be actively confirmed and when an order proposal is made at an appropriate timing when the user is paying attention and is more willing to confirm the order. In the following further description, a user may also be called customer, an order may be called sale, and order proposals may be called sales attempts.

### Sequence

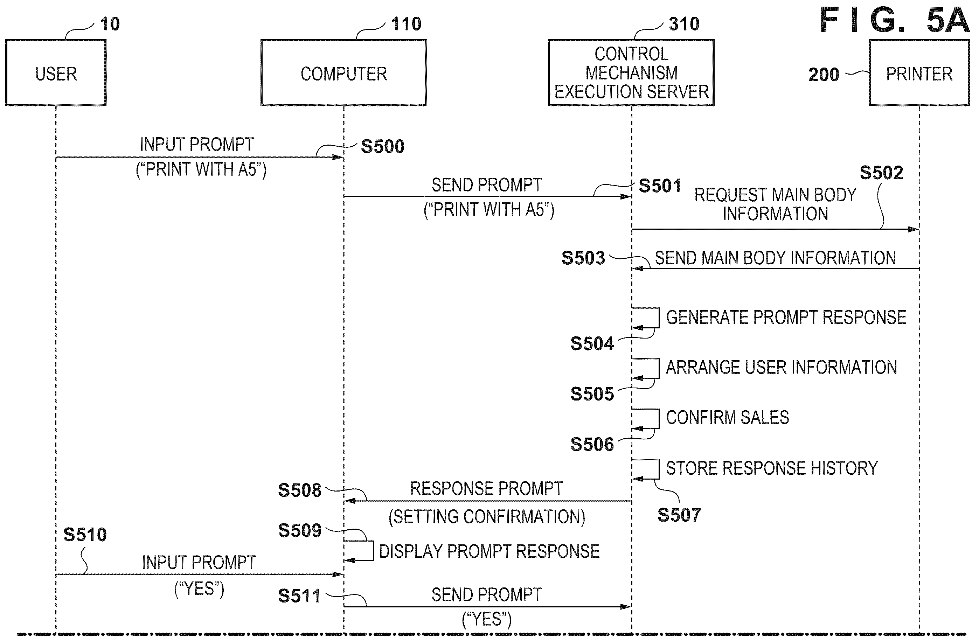

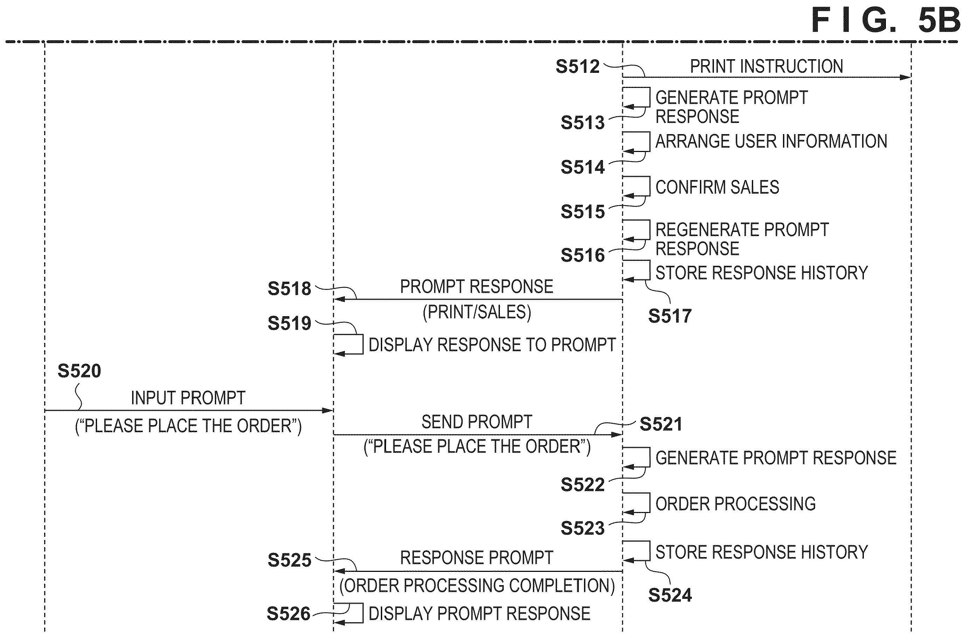

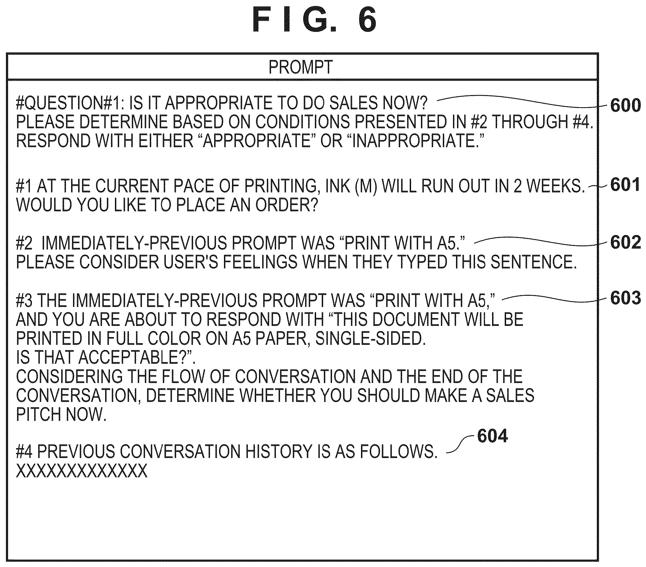

A sequence indicating interactions among the elements in Fig. 4 will be described with reference to Figs. 5A-5B. However, Figs. 5A-5B focuses only on actions significantly related to the technique of the present disclosure, and all interactions are not illustrated in Figs. 5A-5B. Fig. 6 is a diagram illustrating an example of a prompt according to the present embodiment.

The user 10 opens the UI 400 for the purpose of printing, for example. Note that the UI 400 may be opened in any manner, e.g., by pressing a given button. The UI 400 is displayed in the display unit 111 by the CPU 116 controlling the display unit 111. As indicated by the text 410, in the input field 403 of the chat window 402, the CPU 116 of the computer 110 accepts natural language (a prompt) input by the user 10 indicating that the user 10 wishes to print. This corresponds to step S500 in Fig. 5A, and the prompt is accepted by the CPU 116 through the operation unit 112.

Having accepted the input from the user 10, in step S501, the CPU 116 of the computer 110 sends a prompt to the control mechanism 311 of the control mechanism execution server 310. Having received the print instruction, in step S502, the control mechanism 311 requests main body information from the printer 200. The main body information is information necessary for responding to a prompt, such as whether the printer 200 is currently in a state in which printing is possible, for example. In step S503, the printer 200 for which the main body information was requested sends the requested main body information to the control mechanism execution server 310. However, this step is not absolutely necessary, and can be omitted. This information may be obtained directly from the printer 200, or may be obtained indirectly. "Obtaining indirectly" refers to obtaining information stored in a database 312 used for what is known as a cloud service, for example. Although the information obtained from the printer 200 by the control mechanism 311 is not limited in the present embodiment, it is not absolutely necessary to obtain all the data, and collecting only the necessary data on the basis of the details input by the user 10 is also conceivable.

In step S504, the control mechanism 311 generates a response for step S501 using the generative Al 313. Here, the generative Al 313 generates a prompt response for confirming the print settings with the user 10. Specifically, after interpreting the prompt received in step S501, the generative Al 313 calls a printing function. The function functions as a printer driver using what is known as "function calling", generated by executing the function. Accordingly, this function is not absolutely necessary in the technique according to the present disclosure.

As illustrated in Fig. 4, the user inputs text reading "print with A5", as indicated by the text 410. The input text 410 is sent to the generative Al 313 as a prompt; the generative Al 313 interprets the text 410 and outputs print settings based on the text. In the example in Fig. 4, settings in which the paper size is set to A5, the color mode is set to full color, and one-sided printing is set are output. Here, for settings items other than the "A5" designated by the user, a default value set in the printer driver in advance may be used, or a default value set in a printer designated in advance as the destination for sending the print data may be used.

In step S505, the control mechanism 311 updates the various DBs 312 using the information about the printer 200 obtained in step S503, and requests and obtains the user information from the updated various DBs 312. Here, the user information is a product usage history such as an inquiry history, a print history, and the like, a purchase behavior history such as a purchase history, sales text of sales promotions to be made to the user at present, and the like. In the present embodiment, the generation of the sales text is a system in which the sales text is dynamically generated on the basis of the pace of printing and target ink with respect to consumables that are likely to be used up, obtained as the various DBs are updated. More specifically, in this system, a preset message stating "At the current pace of printing, ink (Y) will run out in X weeks. Would you like to place an order?" is provided, and the values for X and Y are dynamically adjusted according to the user's specific circumstances by updating the various DBs 312. However, the sales text generation method is not limited to a method in which updates are made in response to consumables used in this manner. For example, the user's purchase history, conversation history, and the like, along with the product information, may be provided to the generative Al 313, and the sales text may be generated having selected an appropriate product. Alternatively, sales text for a new product may be sent to all users.

In step S506, the generative Al 313 of the control mechanism execution server 310 determines whether the sales text should be inserted at that timing. Here, a prompt such as that illustrated in Fig. 6 has been input to the generative Al 313 and an output of "inappropriate" has been obtained. Therefore, a determination is made not to attempt the sale, and provide the response generated in step S504 as-is. In this manner, according to the present embodiment, a prompt including at least one of customer information, a conversation history (an interaction history), and product information is input to the generative Al 313, and a determination is made as to whether the current time is an appropriate time to attempt a sale. The interaction history preferably includes the immediately-previous interaction (utterance) in addition to past interactions with the customer. This makes it possible to ascertain the flow of conversations thus far, and ascertain the state of the immediately-previous conversation. Although an example of determining the timing for attempting a sale using all these items of information is described here, the present technique is not intended to be limited thereto, and the determination may be made using at least one of these items of information. For example, if the determination is made based solely on the customer information, the determination may be made using at least one of the personal information of the customer, the purchase history, the repair history, the information of the product currently being used, and the response history, included in the customer information. The timing for attempting the sale can also be determined by inputting only product information into the generative Al. For example, situations where the time to purchase a replacement is approaching, a warranty period has expired, or the sale of new functions, optional units, and the like will begin can be expected to arise, and in such cases, the model of the product, version update information, and the like may be input to the generative Al for the determination. This information is stored in the various DBs 312 in association with the user, the product, and the like. Although the basis for the determination by the generative Al 313 is not included in the output in the present embodiment, if the prompt illustrated in Fig. 6 is a prompt that also includes outputting the reason for the determination, an indication that, for example, a sales attempt has been determined to be inappropriate at the current time in consideration of the flow of the conversation can be output as well. In this manner, by using a prompt such as that illustrated in Fig. 6 as an input, the generative Al 313 can output "appropriate" or "inappropriate" with respect to a sales attempt at that time. However, the input prompt, the output format, and the like are not limited thereto, and for example, the input prompt may be changed according to the purpose, and text such as "appropriate" or "inappropriate" may be converted into numerical values such as 0 or 1 such that the output can be handled more easily.

An example of the prompt for determining the timing of the sales attempt will be described here with reference to Fig. 6. First, with text 600, the details of the determination are clarified. At this time, the presence of several conditions is indicated. Specifics about the sales attempt are designated with text 601. Although sales text that is actually assumed is described here, the text can be redesigned later, and thus the information collected in step S505 may be described instead of using a complete sentence. With text 602, the emotions of the user 10 are analyzed, and a designation is made taking those emotions into account. Although this is an analysis of the immediately-previous emotions here for the sake of simplicity, the designation may be made in other ways, such as by considering the entire conversation history on that day. With text 603, a designation is made to perform the determination in consideration of the flow of the conversation. Because generative Al is a system that enables natural conversation, a designation is made which makes use of this characteristic. Here, the text 600 and 601 are examples of "details of the determining", and the text 602 and 603 are examples of a "condition for the determining".

With text 604, the previous conversation history is provided as reference information. Doing so enables the generative Al 313 to increase the materials used for the analysis of the user 10 and future determinations as to whether to attempt a sale, and a more appropriate determination can therefore be made. Although the history of the conversation between the user 10 and the generative Al 313 is provided here as reference information, the reference information is not limited thereto, and other examples of sales successes, failures, and the like with the user may be provided as the reference information instead. A result of the emotion analysis at that time may be provided along with the conversation history in the reference information. At that time, the reference information may be extracted having been limited only to products to be sold. Furthermore, a procedure manual, determination criteria, and the like written by the salesperson or the like may be provided as reference information in addition to the conversation history by the system. In the present embodiment, if, for example, an attempt is to be made to sell a product which is not new but of which the user 10 may not be aware, the product information may be used as reference information, and whether that product is likely to be liked by the user 10 may be taken as a perspective for determining whether to attempt a sale.

The prompt described above is merely an example, and the text for measuring the timing of the sales attempt is not limited thereto. For example, a condition such as "You're a talented salesperson. Pay close attention to the customer's emotions and determine whether to attempt a sale while taking the flow of the conversation into account." or the like may be added. This may be entered as a prompt, or may be used as a setting for a system prompt or the like. Furthermore, it is not necessary to complete all of the prompts indicated here in a single prompt input, and the prompt input and the processing thereof may be performed multiple times. Furthermore, a mechanism for determining whether the determination is valid may be added by inputting the result of this determination into the generative Al 313 again.

The descriptions will now return to Figs. 5A-5B. In step S507, the control mechanism 311 of the control mechanism execution server 310 stores the prompt from the user 10 received in step S501 and the response generated in step S504 as a response history (interaction history) in the various DBs 312. In step S508, the control mechanism 311 sends the prompt response generated in step S504 to the computer 110. In step S509, the computer 110 displays the received prompt. This is the text 411.

In step S510, the CPU 116 of the computer 110 confirms the details of the text 411 from the user 10 and accepts a print instruction, such as that indicated by the text 412, for example. In step S511, the CPU 116 sends the prompt input in step S510 to the control mechanism execution server 310. In step S512, the control mechanism 311 sends an instruction for executing the print to the printer 200. Such an instruction may be sent by the control mechanism execution server 310 to the printer 200 over a network, may be sent to the printer 200 connected by USB to the computer 110 via the computer 110, or the like.

In step S513, the control mechanism 311 sends the prompt accepted in step S511 to the generative Al 313. Having accepted the prompt, the generative Al 313 generates the current response on the basis of the prompt received in step S501 and the prompt response made thereto. In step S514, the control mechanism 311 requests and obtains the user information from the various DBs 312, in the same manner as in step S505. Here, the user information is a product usage history such as an inquiry history, a print history, and the like, a purchase behavior history such as a purchase history, sales text of sales promotions to be made to the user at present, and the like. Here, the response history from S501 to S508 stored in step S507 is also included. At this time, in addition to requesting the user information from the various DBs 312, processing for storing the printing instruction from step S512 in the various DBs 312 may also be performed.

In step S515, the generative Al 313 of the control mechanism execution server 310 determines the timing for the sales attempt in the same manner as in step S506. Aside from adding the information in step S514, the determination processing method uses the same processing and will therefore not be described here. Here, the generative Al 313 determines that the current time is appropriate for attempting a sale. In other words, with respect to the prompt in step S506, indicated in Fig. 6, the generative Al 313 outputs "appropriate" in step S515, in response to the input of the immediately-previous prompts in the text 602 and the text 603 and the details of the response, in a form corresponding to step S515. This is considered to be because the generative Al 313 has determined that the conversation has drawn to a close and the user 10 appears to be in a calm state, and has concluded that an attempt to make a sale may be made.

In step S516, in response to the determination to attempt a sale in step S515, the control mechanism 311 instructs the generative Al 313 of the control mechanism execution server 310 to regenerate the prompt response. Specifically, the generative Al 313 performs processing in which the pure response generated in step S513 in response to the prompt accepted from the user 10 in step S511 and the sale determined to be attempted in step S515 are naturally connected as natural language. In the present embodiment, the generative Al 313 generates natural language text indicating that the printing will be executed and some ink will run out in two weeks at the current usage frequency of the printer 200, and prompting the user to purchase more. Here, text reading "Printing will now be performed. At the current pace of printing, ink (M) will run out in two weeks. Would you like to place an order?" is generated.

In step S517, the control mechanism 311 stores an indication that a determination to attempt a sale was made in step S516, the prompt from the user 10 and the responses thereto, and the like in the various DBs 312. In step S518, the control mechanism 311 sends the prompt response generated in step S516 to the computer 110. In step S519, the CPU 116 of the computer 110 displays the received prompt response (the text 413). In step S520, the CPU 116 accepts, from the user 10, an input indicating that the details of the sale proposed in step S519 has been agreed to, and an order has been requested. This is a prompt, such as that indicated by the text 414, for example.

In step S521, the CPU 116 sends the prompt input in step S520 to the control mechanism 311. In step S522, the control mechanism 311 sends the prompt to the generative Al 313, and issues an instruction to generate a response to the prompt. In step S523, the control mechanism 311 perform processing for ordering ink. Although the control mechanism 311 performs the order processing by rewriting the data of the various DBs 312 in the present embodiment, the processing is not limited thereto, and may be directed to a separate ordering system.

In step S524, the control mechanism 311 stores the interactions up to that point in the various DBs 312. In the present embodiment, ink is sold in order to be used as a basis for determining the timing of future sales attempts, and the fact that the sale was successful is also stored. This increases the amount of material to be considered when determining the timing in the future, which makes it possible to improve the accuracy of the determinations. However, to reduce the load on the system, some or all of the information may not be stored.

In step S525, the control mechanism 311 sends the response generated in step S522 to the computer 110 in response to the prompt made in step S521. In step S526, the CPU 116 displays the response to the prompt received from the control mechanism execution server 310 in step S525. This is the text 415.

As described above, the information processing apparatus (the control mechanism execution server) according to the present embodiment provides an interaction using generative Al to a customer of an apparatus that provides a service. This information processing apparatus inputs at least one item of information among an interaction history of interactions with the customer, customer information, and product information to the generative Al and cause the generative Al to determine whether a current time is an appropriate time to attempt sale of a product. Furthermore, when the generative Al determines that the current time is an appropriate time to attempt to a sale of the product, the information processing apparatus responds to the interaction and proposes the sale of the product. In this manner, according to the present embodiment, a novel mechanism for appropriately determining the timing to attempt a sale within the flow of chat responses can be provided.

### Second Embodiment

A second embodiment of the present disclosure will be described hereinafter. The present embodiment will describe an embodiment in which the display method and the input method in the chat window 402 are different, using a configuration equivalent to that described in the first embodiment. Because the differences from the first embodiment are the display method and the input method, discussions of the determination of the sales timing will be omitted.

### Chat Window

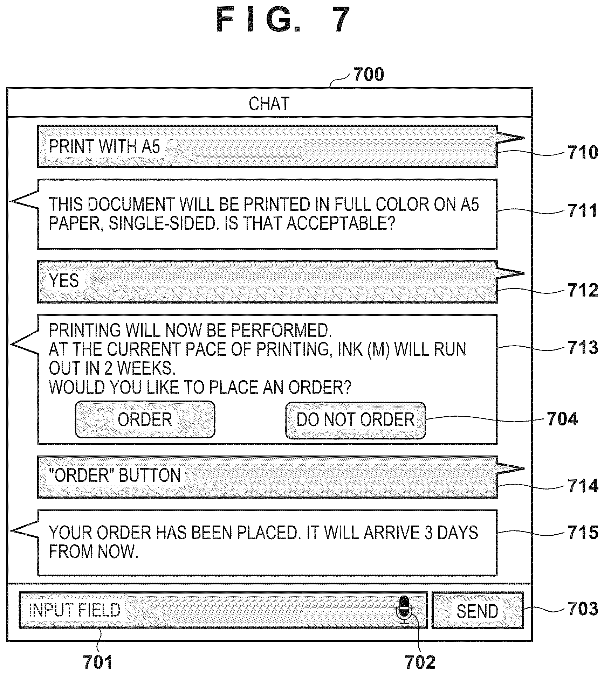

The chat window in the UI, which indicates the interaction according to the present embodiment, will be described with reference to Fig. 7. The present embodiment performs processing equivalent to that described in the first embodiment, using a different display method and input method. In other words, a chat window 700 is equivalent to the chat window 402 in terms of the content of the interaction.

An input field 701 corresponds to the input field 403, and a send button 703 corresponds to the send button 404. Likewise, text 710 corresponds to the text 410, text 711 corresponds to the text 411, text 712 corresponds to the text 412, text 713 corresponds to the text 413, text 714 corresponds to the text 414, and text 715 corresponds to the text 415.

The difference between the chat window 700 and the chat window 402 is voice input 702, the display method of the text 713, and the input method of the text 714. As indicated by the voice input 702, a voice input button may be displayed in the input field 701 or the like, and voice input may be accepted. In addition, as indicated by the text 713, buttons 704 may be displayed as operation objects that accept an action of the user 10 in addition to text, so as to facilitate understanding by the user 10 when promoting a sale or the like. This is also to make it easier to determine the actions expected of the user 10 ("order" or "do not order"). In other words, by confirming the buttons 704, the user 10 can easily understand that they are being asked to determine whether to order ink (M), and can easily respond thereto.

As indicated by the text 714, the result of operating the buttons 704 may be displayed as text. Specifically, the user 10 presses the "order" button among the buttons 704 displayed in the text 713. To indicate that a button has been pressed, the "order" button being pressed is indicated in the text 714. The display format is not limited thereto, and other display methods and notification methods may be devised and displayed. Alternatively, the operation result may be displayed as text as indicated by the text 714, such as when displaying the operation result by changing the display colors of the buttons 704 themselves or the like.

As described above, the information processing apparatus according to the present embodiment presents the attempt of the sale of a product along with an operation object (an "order" button and a "do not order" button) that accepts a response from a customer to the sales attempt. In this manner, the present disclosure is not limited to the configuration of the first embodiment described above, and can be applied with various other display formats and input methods. The configuration of the present embodiment can also be implemented in combination with the third and fourth embodiments (described below).

### Third Embodiment

A third embodiment of the present disclosure will be described hereinafter. The present embodiment will describe an embodiment in which a day on which an inquiry is made and a day on which a sale is attempted are different days, using a configuration equivalent to that described in the first embodiment. In the present embodiment, the printer 200 is disconnected from the network, and only chats corresponding to the inquiries are performed.

### Chat Window

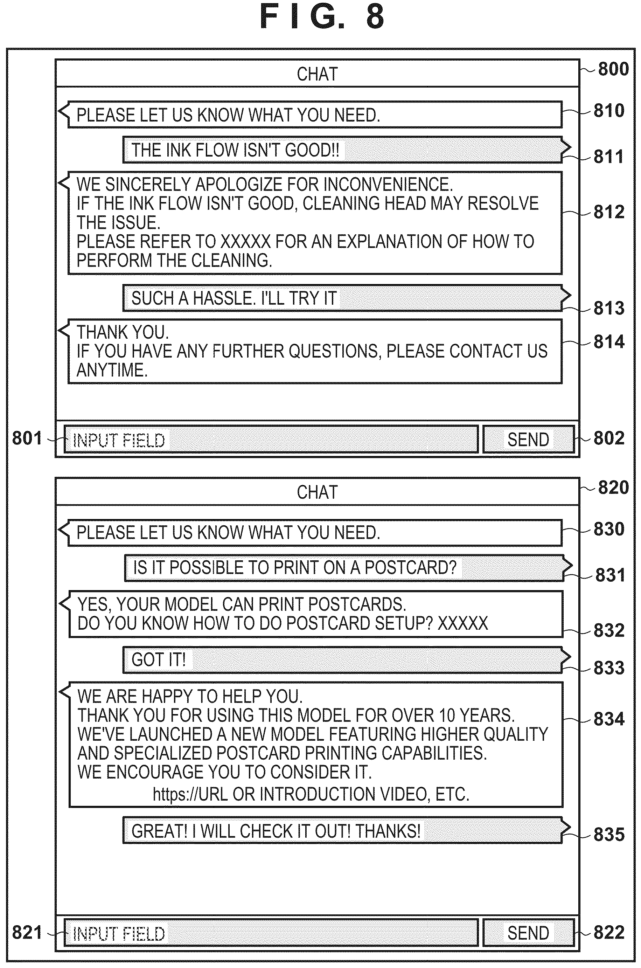

The chat window in the UI, which indicates the interaction according to the present embodiment, will be described with reference to Fig. 8. A chat window 800 and a chat window 820 correspond to the chat window 402. The chat window 820 is an interaction from a date later from that indicated by the chat window 800. An input field 801 and an input field 821 correspond to the input field 403. A send button 802 and a send button 822 correspond to the send button 404. The method for displaying the chat window is not limited to that according to the first embodiment described above, and for example, a UI associated with a driver and the UI of the inquiry chat may be displayed independently. The chat window 800 may be displayed using the computer 110, and the chat window 820 may be displayed using a different computer.

The chat window 800 is an example of the interaction on a day when the printer 200 is not in good condition. As indicated by text 810, the computer 110 may display a message to the user 10 assuming that an inquiry will be made. However, this is not a required configuration, and need not be displayed, as in the first embodiment described above. As indicated by text 811, the user 10 inputs an indication that the printer 200 is not printing properly. The user 10 is estimated to be feeling negative or angry due to the fact that the printing is not proceeding as expected. As indicated by text 811, such emotions may appear in the input from the user 10. In the present embodiment, the user's emotions are detected in such an interaction, which is then used as a material for determining the timing at which to attempt a sale.

The subsequent text 812 to text 814 are responses to the text 811 and interactions following thereafter. Because the present embodiment is an example focusing on a situation where the system focuses on achieving an effect over multiple days, the input, such as that indicated by the text 811, is not intended to limit the present disclosure, and other inputs may be used instead. Accordingly, the interactions from the text 812 to the text 814 are not limited to the present embodiment, and other interactions may be performed.

As indicated by text 812, the system presents a proposed solution in response to the input from the user 10. Such an inquiry response may be realized by creating the generative Al 313 so as to be specialized for such inquiries, or may be realized using a mechanism such as Retrieval-Augmented Generation (RAG). The system determines that it is inappropriate to attempt a sale at this time, and presents only a proposed solution for the inquiry in the text 811. To be more specific, when the text 810 is posted, the prompt "the ink isn't coming out properly!!" in the text 811 is sent from the computer 110 to the control mechanism execution server 310 in step S501. In step S504, the generative AI 313 generates an answer based on the prompt. The generative Al 313 determines whether the timing is appropriate for attempting a sale, using the response and the sales text received in step S505. In other words, in the prompt in Fig. 6, the generative Al 313 determines the timing of attempting the sale when the prompt in which the sales text has been updated is input, taking the immediately-previous prompt as the text 811 and the details of the response as the text 812. Here, as a result, the generative Al 313 outputs "inappropriate". This is the result of determining that the flow of the conversation is a complaint and a response thereto, and it would be inappropriate to attempt a sale in that process.

As indicated by text 813, the user 10 implements the proposed solution presented in text 812. The user 10 is angry at the inability to print as expected, and negative emotions are expressed in the text 813. The system responds to the text 813 as indicated by the text 814. The system also determines whether to attempt to make a sale when responding to this text. In the flow of this inquiry, the system has determined that it is better not to attempt to make a sale at this time on the basis of the details of the conversation and the assumed state of the user 10. More specifically, as in the case of the text 812, the generative Al 313 outputs "inappropriate" as the determination of the timing to attempt the sale when a prompt in which the immediately-previous prompt is the text 813 and the details of the response are the text 814 is input in the prompt in Fig. 6. This is the result of determining that the flow of the conversation is a complaint and a response thereto, and it would be inappropriate to attempt a sale in that process.

The chat window 820 assumes that the same user has made an inquiry at a date after that of the inquiry made in the chat window 800. Text 830 corresponds to the text 810. As indicated by text 831, the user 10 makes an inquiry regarding the functions of the printer 200 in a calm state, for example.

The system responds to the inquiry in the text 831 as indicated by text 832. As with the text 812, a determination is made as to whether a sale should be attempted when the response to the input text 831 of the user 10 has been created, and it is determined that it is preferable not to attempt a sale as the current time. As a result, only the response to the text 831 is made, as indicated by the text 832.

As indicated by text 833, the response from the system has solved the problem faced by the user 10. As indicated by text 834, having accepted the input of the text 833, the system attempts a sale in addition to the response in the text 833. Although the system detected negative emotions when the user 10 input the text 811 and the text 813, the system estimates that the user is feeling positive emotions when inputting the text 833. Accordingly, when making the response of the text 834, the system determines that the timing is appropriate to attempt a sale, and the sales attempt is added in addition to the response to the text 833. As indicated by text 835, the sale was attempted at exactly the right timing, and the user 10 is therefore interested in the new product, and confirms the proposed website and introductory video.

As described thus far, as an input to the generative Al, the information processing apparatus according to the present embodiment includes a condition for determining the timing at which to attempt to sell a product on the basis of an emotion of the customer inferred from an immediately-previous interaction. In this manner, according to the present embodiment, a sale can be attempted at a more effective timing by taking into account the emotions of the customer when determining the timing of the sale. In addition, according to the present embodiment, even if the product body (the printer) is isolated from the network, the customer can be interacted with using the chat window displayed in the display unit of the computer 110 connected over the network, and the same effects as those described in the first and second embodiments can therefore be achieved.

### Fourth Embodiment

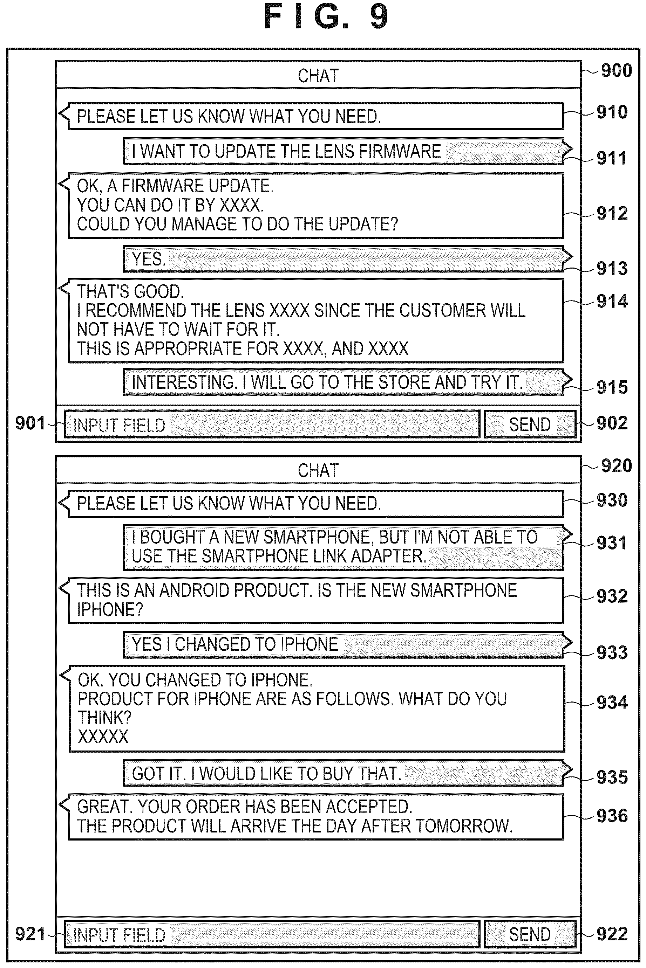

A fourth embodiment of the present disclosure will be described hereinafter. The present embodiment will describe, with reference to Fig. 9, that the present technique can be applied not only to inquiries regarding a printer, but also to inquiries about another product. The configuration according to the present embodiment is similar to that described above in the third embodiment, and differs only in terms of the product in question.

### Chat Window

The chat window in the UI, which indicates the interaction according to the present embodiment, will be described with reference to Fig. 9. A chat window 900 and a chat window 920 are chat Uls for performing the chat of the present disclosure. An input field 901 and an input field 921 are Uls through which the user 10 makes the input. The user 10 can send the text entered therein by pressing a send button 902 and a send button 922. Text 910 and text 930 are displayed when the chat window 900 and the chat window 920 are opened, but this is not a required configuration.

The chat window 900 indicates a chat in which inquiries about a camera, a lens, or the like are handled, rather than a printer. As indicated by text 911, the user 10 has made an inquiry regarding the method for updating the firmware of a camera lens. The system presents a response to the inquiry in the text 911 as indicated by text 912. The system determines that no sale will be attempted here, and presents only the response to the inquiry with the text 911, in order to confirm whether the user 10 is satisfied with the response that has been generated. Specifically, when the text 911 is posted, a prompt reading "I want to update the lens firmware" is sent from the computer 110 to the control mechanism execution server 310 in step S501. In step S504, the generative Al 313 generates an answer based on the prompt. The generative Al 313 determines whether the timing is appropriate for attempting a sale, using the response and the sales text received in step S505. In other words, in the prompt in Fig. 6, the generative Al 313 takes the immediately-previous prompt as the text 911 and the details of the response as the text 912, and in the text 912, the prompt in which the sales text has been updated is input, and the timing of the sale is determined. Here, as a result, the generative Al 313 outputs "inappropriate". This is the result of determining that the conversation has not ended and that a similar conversation will continue thereafter, and it would be inappropriate to attempt a sale in that process.

As indicated by text 913, the user 10 makes an input indicating they are satisfied with the response with the text 912. As indicated by text 914, upon receiving the text 911 and the text 913, the system determines that it is better to attempt the sale at the timing of the response to the text 913, and makes the response to the text 913 to attempt the sale. At this time, the same processing is performed as when displaying the text 912, but the generative Al 313 determines that the response to the text 913 is a break in the conversation, and that it would be appropriate to attempt to make a sale thereafter. Accordingly, in step S516, the generative Al 313 updates the response details using the response to the text 913 and the sales text, and makes the response as indicated by the text 914. As indicated by text 915, the user 10 for whom the sale is being attempted at the appropriate time may be interested in the lens being sold.

The chat window 920 indicates a chat in which inquiries about a smartphone accessory, rather than a printer, are handled. As indicated by text 931, the user 10 has made an inquiry regarding their worried about upgrading their smartphone. The system presents a response to the inquiry in the text 931 as indicated by text 932. The system makes a determination here to not attempt a sale, and presents only the response to the inquiry in the text 931, in order to confirm the response and the smartphone being used. Specifically, the same processing is performed when displaying the text 912, but because the response to the text 931 ends with a question, the generative Al 313 determines that the conversation will continue thereafter, it is inappropriate to attempt a sale at the current time, and only makes a response to the text 931.

As indicated by text 933, the user 10 inputs an indication that they have changed their smartphone model. As indicated by text 934, on the basis of the details of the text 933, the system responds with an indication that the smartphone accessory being used by the user 10 cannot be used with the smartphone being used by the user 10. At that time, the system determines that the current time is appropriate for attempting a sale in accordance with the smartphone of the user 10, and attempts the sale. Specifically, the same processing as when displaying the text 912 is performed, but the generative Al 313 determines the response to the text 933 and that the current time is appropriate for attempting to sell a new product. Accordingly, in step S516, the generative Al 313 updates the response details using the response to the text 933 and the sales text, and makes the response as indicated by the text 934. As indicated by text 935, the user 10 who needs a product which matches their smartphone inputs an indication that they wish to make a purchase. The system indicates that the order has been accepted, as indicated by text 936.

The foregoing first to third embodiments described cases where the apparatus is an image forming apparatus (a printer) as the apparatus that provides a service. For example, in the case of the image forming apparatus, the interaction is performed in a chat window of the print settings screen, and the product to be sold is a consumable used in the image forming apparatus or a new image forming apparatus product. However, as described in the present embodiment, as the apparatus that provides a service, the technique can be applied in products other than printers, such as cameras or smartphones. For example, as described above, in the case of a camera, the present technique can be applied in an interaction in response to an inquiry regarding updating the firmware of a lens. In the case of a smartphone, the technique can be applied in an interaction in response to an inquiry about a smartphone link.

### Conclusion

As described thus far, according to the embodiments, in a chat in which an interaction with the user 10 is performed, the optimal timing to attempt a sale can be determined, and the sale can be attempted at that timing. Note that the present disclosure is not intended to be limited to the foregoing embodiments, and many variations and changes can be made within the scope thereof. The present disclosure can also be realized as a process executed by supplying a program implementing one or more functions of the foregoing embodiments to a system or apparatus over a network or by a storage medium and then causing one or more processors of a computer of the system or apparatus to read out and execute the program.

In the embodiments, the chat window 402 is displayed in the display unit 111 of the computer 110, the computer 110 interacts with the control mechanism execution server 310, and the interaction with the user 10 is performed in the chat window 402. However, the configuration is not limited thereto. For example, the chat window may be provided as a chat for inquiries, and the UI may be displayed in a browser such as Microsoft Edge or Google Chrome. The chat window may also be displayed in the UI of a generative application such as ChatGPT, or displayed in a UI used when printing with an application such as Microsoft Office. The chat window may furthermore be displayed in a chat application UI such as Microsoft Teams or Copilot. In such a case, the present disclosure can be implemented such that the control mechanisms 311, 321, and the like are created as plugins for the Uls and the respective processes are executed. Additionally, although the first to third embodiments described a format applied to a printer, the present disclosure is not intended to be limited to printers, and can be applied to products other than a printer, as in the aforementioned fourth embodiment.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (310, 320) comprising:
interaction means (311, 321) for providing an interaction using generative Al to a user of an apparatus providing a service;
determination means (311, 321) for inputting at least one item of information among an interaction history of interactions with the user, user information, and product information to the generative Al and cause the generative Al to determine whether a current time is an appropriate time to propose an order of a product; and
proposing means (311, 321) for responding to the interaction and propose the order of the product in a case where the generative Al determines that the current time is an appropriate time to propose the order of the product.

2. The information processing apparatus according to claim 1,
wherein the interaction history includes an immediately-previous interaction with the user in addition to a past interaction with the user.

3. The information processing apparatus according to claim 2, further comprising
storage means (312, 331) for storing devices to store the interaction history of interactions with the user in a database.

4. The information processing apparatus according to claim 2,
wherein the interaction by the interaction means is an interaction in an inquiry regarding the apparatus providing the service.

5. The information processing apparatus according to claim 4,
wherein the input to the generative Al includes details of the determining and a condition for the determining, in addition to the at least one of the interaction history of interactions with the user, the user information, and the product information.

6. The information processing apparatus according to claim 5,
wherein the input to the generative Al includes a condition for determining that a time before completion of the inquiry is not the appropriate time to propose the order of the product.

7. The information processing apparatus according to claim 5,
wherein the input to the generative Al includes a condition for determining the appropriate time to propose the order of the product on the basis of an emotion of the user inferred from the immediately-previous interaction.

8. The information processing apparatus according to claim 1,
wherein the proposing means presents the proposal of the order of the product along with an operation object that accepts a response of the user to the proposal.

9. The information processing apparatus according to claim 8,
wherein the user information includes at least one of personal information of the user, an order history, a repair history, information about a product currently being used, and a response history.

10. The information processing apparatus according to claim 8, further comprising
ordering means (311, 321) for ordering the product in response to obtaining consent from the user in response to the proposed order of the product.

11. The information processing apparatus according to claim 8,
wherein the interaction means performs the interaction with the user through a display unit (301) of the apparatus providing the service, or through a display unit (111) of a computer (110) used by the user, the apparatus and the user being communicably connected over a network.

12. The information processing apparatus according to claim 10,
wherein the apparatus providing the service is an image forming apparatus (200), and
the interaction is performed in a chat window of a print settings screen.

13. The information processing apparatus according to claim 12,
wherein the product subject to the proposal of the order is a consumable used in the image forming apparatus or a new image forming apparatus product.

14. The information processing apparatus according to claim 10,
wherein the apparatus providing the service is a camera or a smartphone.

15. A method for controlling an information processing apparatus, the method comprising:
providing an interaction using generative Al to a user of an apparatus providing a service;
inputting at least one item of information among an interaction history of interactions with the user, user information, and product information to the generative Al and causing the generative Al to determine whether a current time is an appropriate time to propose an order of a product; and
responding to the interaction and proposing the order of the product in a case where the generative Al determines that the current time is an appropriate time to propose the order of the product.

16. A non-transitory computer-readable storage medium storing a computer program for causing a computer to execute each step of a method for controlling an information processing apparatus, the method comprising:
providing an interaction using generative Al to a user of an apparatus providing a service;
inputting at least one item of information among an interaction history of interactions with the user, user information, and product information to the generative Al and causing the generative Al to determine whether a current time is an appropriate time to propose an order of a product; and
responding to the interaction and proposing the order of the product in a case where the generative Al determines that the current time is an appropriate time to propose the order of the product.
